# EUROPEAN PATENT APPLICATION

(11) **EP 4 826 477 A1**
(43) Date of publication of application: **21.10.2026**
(21) Application number: 26155312.7
(22) Date of filing: 30.01.2026
(51) Int. Cl.: G05B 23/02

(54) **IMAGE FORECASTING FOR DAMAGE IDENTIFICATION IN ENGINE COMPONENTS FOR FUTURE FLIGHT CYCLES**

(30) Priority: 16.04.2025 US 202519180429
(71) Applicant: General Electric Company, Cincinnati, Ohio 45215 (US)
(72) Inventor: BHADURI, Anindya, Evendale, 45215 (US); PANDITA, Piyush, Evendale, 45215 (US); DORD, Jean-Francois, Evendale, 45215 (US); WANG, Liping, Evendale, 45215 (US)
(74) Representative: Openshaw & Co.

(57) **Abstract**

Systems (200) and methods (10, 20) for forecasting damage in engine components using advanced machine learning techniques, including hybrid frameworks and spatiotemporal modeling integrate annotated inspection images (13a) and operational engine data to generate forecasted damage states and operational parameters for future engine cycles. The machine learning model (17) includes convolutional layers to extract spatial features, recurrent layers to analyze temporal patterns, and an output layer that predicts future damage states, operational conditions, and distress ranks of engine components. Physics-informed constraints are incorporated to ensure predictions adhere to physical laws, such as irreversibility of damage progression. By leveraging these forecasts, the system optimizes maintenance schedules, reduces unnecessary inspections, and extends time-on-wing of engine components. This novel approach provides a significant improvement over traditional methods by automating damage analysis, capturing multi-failure mechanisms, and enhancing predictive maintenance strategies.

## Description

### TECHNICAL FIELD

The present disclosure relates to systems and methods for forecasting damage in engine components using advanced machine learning techniques, including hybrid frameworks and spatiotemporal modeling, to enhance predictive maintenance and operational efficiency.

### BACKGROUND

Predictive maintenance in aerospace and mechanical systems is an important component in reducing downtime, improving safety, and optimizing operational efficiency. Traditional methods often rely on manual inspection and subjective evaluations, such as assigning distress rankings to observed defects. These methods are inherently limited by operator variability and a lack of granular data on failure modes. Furthermore, such approaches are typically constrained to single failure mechanisms, making it challenging to capture complex interactions between multiple degradation processes.

### BRIEF DESCRIPTION OF DRAWINGS

These and other features, aspects, and advantages of the present disclosure will become better understood when the following detailed description is read with reference to the accompanying drawings in which like characters represent like parts throughout the drawings, wherein:
FIG. 1 is an example block diagram of a method for generating and using a machine learning network configured to perform image forecasting of damage in engine components, in accordance with aspects of the present disclosure;
FIG. 2 is a diagram for generating an improved analytical model based on the machine learning network of FIG. 1, in accordance with aspects of the present disclosure;
FIG. 3 is a flow chart of a method of using the machine learning network of FIG. 1, in accordance with aspects of the present disclosure;
FIG. 4 is a block diagram of a controller for executing the machine learning network of FIG. 1, in accordance with aspects of the present disclosure;
FIG. 5 is a block diagram of a machine learning network with inputs and outputs, in accordance with aspects of the present disclosure; and
FIG. 6 is a diagram of layers of the machine learning network of FIG. 5, in accordance with aspects of the present disclosure.

### DETAILED DESCRIPTION

Although this disclosure will be described in terms of specific aspects, it will be readily apparent to those skilled in this art that various modifications, rearrangements, and substitutions may be made without departing from the spirit of this disclosure.

For the purpose of promoting an understanding of the principles of this disclosure, reference will now be made to exemplary aspects illustrated in the drawings, and specific language will be used to describe the same. It will nevertheless be understood that no limitation of the scope of this disclosure is thereby intended. Any alterations and further modifications of the features illustrated herein, and any additional applications of the principles of this disclosure, as illustrated herein, which would occur to one skilled in the relevant art and having possession of this disclosure, are to be considered within the scope of this disclosure.

Engine components in aerospace and other mechanical systems are subject to complex interactions of multiple failure mechanisms, such as cracking, creep, corrosion, and erosion. Traditional predictive maintenance techniques often rely on manually assigned distress rankings or single-value condition metrics, which capture only one failure mode at a time and typically yield abstract numeric health indicators. Such methods also lack detailed spatiotemporal modeling, making it difficult to forecast where and how damages expand over time. As a result, maintenance decisions are heavily dependent on subjective assessments and do not incorporate more granular, image-based evidence of damage progression.

Unlike prior approaches that focus on numeric fault metrics, the present application emphasizes forecasting actual images of engine parts across future operational cycles. By generating predicted images, the disclosed framework provides fine-grained assessments of damage, such as crack tip growth or localized corrosion patches. Through advanced deep learning models, the invention integrates spatiotemporal correlations between historical image data and operational engine parameters, allowing for detection of multiple failure mechanisms in a single component. This image-centric methodology reduces reliance on subjective visual inspections, enabling maintainers and engineers to view clearly annotated and automatically forecasted damage states. Maintenance planning thus becomes more adaptive, with fewer unnecessary inspections and more accurate time-on-wing estimates, while providing deeper insights into the nature of ongoing component degradation.

The present disclosure provides a novel system and method that leverage advanced deep learning techniques to forecast damage in engine components across future operational cycles. The approach combines a domain-informed machine learning network with a transformer-based convolutional neural network (CNN), allowing for the prediction of damage states based on temporal sequences of inspection images and operational engine data. This system addresses limitations in existing methodologies by capturing spatiotemporal correlations within the image data, quantifying overall damage across multiple failure mechanisms, and incorporating physics-based constraints. As a result, the method reduces the frequency of required inspections, enhances time-on-wing estimates (e.g., the amount of operational time an aircraft engine spends mounted on an aircraft before it needs to be removed for maintenance or overhaul), and accelerates updates to maintenance schedules.

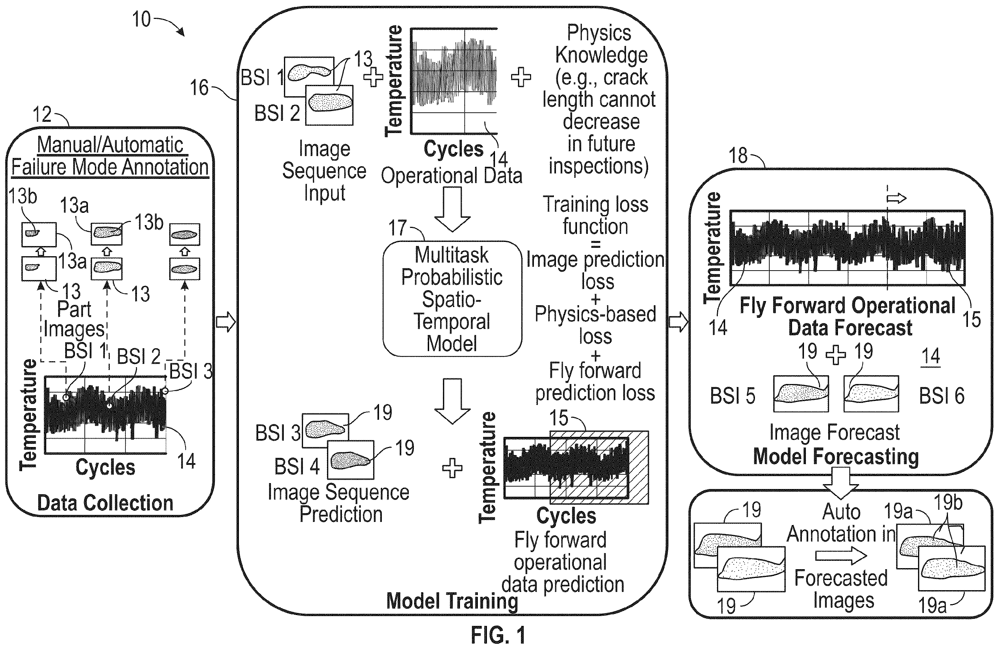

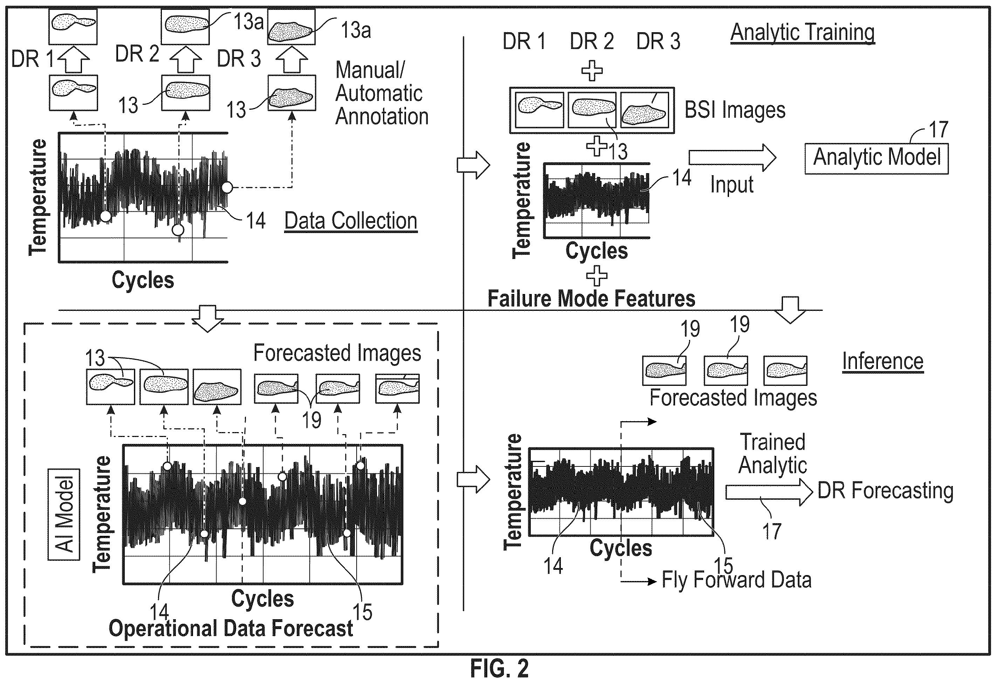

FIG. 1 shows a flow chart of a method 10 for generating and using a machine learning network configured for image forecasting of damage identification in engine components. The method 10 may be embodied as software instructions stored in memory and executed by a processor, e.g., controller. FIG. 2 shows additional details of the implementation of the machine learning network for prediction and forecasting of damage state or distress rank (DR) of engine components.

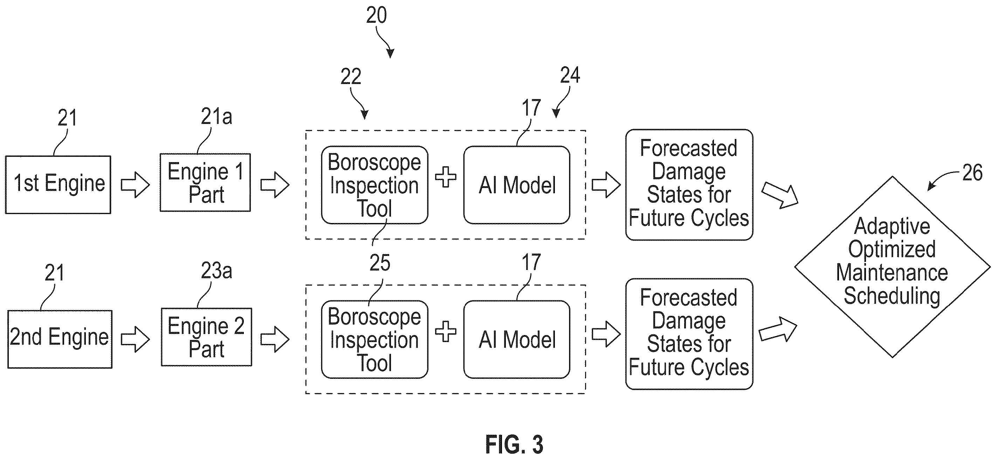

The first step 12 in the process involves data collection, which serves as the foundation for training and utilizing the machine learning network. During this phase, inspection images 13 of engine components are obtained. Images may be collected from a plurality of engines and of a variety of different components. These components may include first stage compressor stator (S1) blades, the fuel nozzles, shrouds, combustion chamber liners, compressor blades and stators, turbine discs and rotors, casing and housing of the engine, including fan and turbine casings, and the like. The components are inspected for wear and damage resulting from operational stress. Inspection images may be obtained using any suitable imaging device 25 (FIG. 3) such as a camera and/or a borescope to obtain inspection images (BSI).

In addition to normal wear, the method 10 may be used to analyze damage arising from collisions (e.g., foreign object strikes) or previously repaired components, thereby tracking the effectiveness of a repair or identifying new damage that emerges afterward. Other sensor systems, including multispectral cameras, infrared or thermal imagers, and three-dimensional scanning devices, may be used as well, each capable of capturing timestamped images for enhanced correlation of damage states with specific points in an engine's operational history.

Once obtained, the inspection images 13 of the engine components are annotated to identify and classify various types of damage features of the engine components as annotated images 13a. Annotations 13b can be performed manually by experts or automatically through machine learning-based algorithms. In manual annotation, skilled operators review the images 13 to identify and label damage features, leveraging their domain expertise to ensure accuracy. Automatic annotation may utilize trained machine learning models to analyze the images and apply annotations without human intervention, improving efficiency and consistency. In aspects, combination of manual and automated annotation processes may be used.

Annotations 13b represent the classification or labeling of specific damage features observed in the images. These features can include cracks, which may manifest as linear disruptions in the material; creep, characterized by permanent deformation due to prolonged stress and high temperatures; corrosion, indicated by surface degradation or pitting; erosion, caused by material loss due to abrasive particles; wear, representing surface damage from friction; discoloration, which may signify overheating; and spalling, where surface fragments break off due to fatigue or impact.

These annotations 13b can be applied at various levels of granularity within the image. For instance, an annotation may correspond to a specific pixel or a group of pixels representing a localized damage feature, such as the tip of a crack or the boundary of a corroded area. Further, each pixel or group of pixels may have more than one annotation corresponding to the identified type of damage. By associating these labels with the corresponding image regions, the annotation process establishes a detailed dataset that serves as ground truth for training and validating machine learning models of the present disclosure.

A computer-implemented AI or machine learning algorithm, or an operator, may manually or automatically pair or align the annotated images 13a with operational engine data (i.e., general engine data from a plurality of engines) to create a comprehensive dataset that enables accurate damage forecasting and analysis. The annotated image data includes labels identifying various damage features, such as cracks, creep, corrosion, wear, and spalling, applied at the pixel or region level within the images. This visual data is enriched by pairing the visual data with corresponding operational engine data, which provides contextual information about the conditions under which the damage occurred.

Operational engine data encompasses a variety of parameters related to engine's performance and operational history. These parameters may include temperature profiles, representing the thermal conditions experienced by the engine during operation and cycle counts as shown in a plot 14 of step 12, which tracks the number of operating cycles or flight hours the engine has undergone; pressure levels, which influence stress distributions on engine components; rotational speeds, reflecting the dynamic forces acting on parts such as blades and rotors; and vibration data, which can indicate mechanical imbalances or stress. Additional parameters, such as fuel flow rates, environmental exposure data, and load conditions, may also be included to provide a holistic view of the engine's operating environment.

As shown in step 12 of FIG. 1, a computer-implemented AI or machine learning algorithm may pair the annotated images 13a with this operational engine data (e.g., plot 14) to create a comprehensive dataset. Each annotated image 13a is associated with a corresponding set of operational parameters recorded prior to the image being captured or during the relevant operational cycle. For instance, an annotated image showing a crack on a turbine blade may be linked with temperature and pressure readings, cycle counts, and vibration data from the specific period when the damage likely initiated or progressed.

This pairing process of annotated images 13a and data may involve aligning timestamps or operational conditions between the image data and the engine's performance logs. By integrating annotated visual data with detailed operational parameters, the resulting dataset provides a robust foundation for training machine learning models. These models can then leverage both spatial patterns in the annotated images 13a and temporal trends in the operational data to predict future damage states, identify failure mechanisms, and enhance maintenance planning as described below. By leveraging annotated images and paired data, step 12 establishes the ground truth that the model will learn from during training.

The second step 16 in the process of FIG. 1 involves model training to develop a multitask probabilistic spatiotemporal model 17 based on the comprehensive dataset established in step 12. The multitask probabilistic spatiotemporal model 17 is a computational framework designed to perform multiple related tasks simultaneously, while capturing uncertainties and analyzing patterns across both spatial and temporal dimensions. In the context of damage forecasting for engine components, multitask learning enables the model 17 to handle various objectives, such as predicting future inspection images to represent damage evolution, forecasting operational parameters like temperature and cycles for future conditions, and identifying and quantifying multiple damage mechanisms (e.g., cracks, creep, or wear). By sharing features across these related tasks, multitask learning improves the model's efficiency and accuracy.

The probabilistic nature of the model 17 allows it to account for uncertainty in its predictions. Instead of outputting single deterministic values, the model 17 predicts probability distributions, providing insights into the likelihood of various outcomes. This is particularly useful in predictive maintenance, which relies on understanding the confidence level. The probabilistic approach also helps to manage noise in the input data and variations in operational conditions, enhancing the robustness of the forecasts.

The spatiotemporal aspect of the model 17 refers to its ability to analyze both spatial and temporal data. Spatially, the model 17 captures patterns within images 13, such as the location, size, and geometry of damage features like cracks or corrosion. Temporally, the model 17 tracks how these damage features evolve over time by analyzing sequences of images 13 and operational data from multiple inspection cycles. This dual focus allows the model 17 to identify complex interactions, such as how damage at one location may influence or correlate with damage at another over time, providing a more comprehensive understanding of the degradation process.

The model integrates these multitask, probabilistic, and spatiotemporal components within a structured framework, such as a transformer-based CNN. The model also includes physics-informed layers that incorporate domain-specific constraints to further enhance prediction accuracy and reliability. This sophisticated combination of capabilities enables the model to deliver accurate, realistic, and interpretable forecasts of damage progression and operational parameters, supporting advanced predictive maintenance strategies.

As shown in FIG. 1, the model 17 is trained with a sequence of annotated images 13a, such as inspection images BSI1, BSI2, paired with operational engine data of plot 14, including temperature and cycles. As shown in step 16, the training process involves inputting the comprehensive dataset, including the annotated images 13a and operational engine data of plot 14, into the spatiotemporal model. The trained model's output includes forecasts of image sequences and operational data for future cycles, which are used for proactive maintenance and optimized engine management. The robust training process ensures that the model 17 can effectively generalize across various failure modes and operational conditions, providing a foundation for accurate forecasting and decision-making.

During the training process, the model is configured to generate predictions for both future inspection images, such as BSI3 and BSI4 in step 16 of FIG. 1, and operational engine data, as shown by a portion 15 of plot 14. The portion 15 represents the model's ability to forecast operational parameters into future cycles, referred to as fly forward operational data prediction. The fly forward operational data prediction allows the model to predict key operational metrics, such as temperature, cycle counts, pressure levels, and vibration data, based on historical patterns and spatiotemporal correlations within the dataset. Portion 15 of plot 14 reflects the continuation of these trends beyond the observed data, capturing future operational conditions that influence the progression of damage in engine components.

The training process incorporates domain-specific physics knowledge, such as constraints that damage features, such as crack lengths, cannot decrease in subsequent inspections, to guide the learning process. Physics knowledge includes domain-specific principles and constraints derived from physical laws and engineering insights, ensuring the model produces realistic and physically consistent predictions. For example, damage features such as crack lengths, creep deformation, or corrosion depth are inherently irreversible, and this constraint ensures the model predicts non-decreasing trends for these metrics across inspection cycles. Stress concentration effects, which make areas such as sharp edges or material discontinuities more susceptible to damage initiation, can guide the model's focus within images. Similarly, material fatigue behavior, driven by stress intensity, load cycles, and material properties, provides predictable patterns for crack propagation that can enhance the model's accuracy. Thermal effects, such as accelerated creep and oxidation at high temperatures, and operational load effects, such as cyclic stress leading to fatigue damage, are useful factors for forecasting damage progression. Environmental conditions, like humidity or salt-laden air, may accelerate surface corrosion, while the interaction of failure mechanisms, such as corrosion weakening material and exacerbating fatigue cracking, can also be incorporated. Geometry-specific constraints, such as the curvature or thickness of turbine blades or combustion chamber liners, influence damage initiation and propagation, tailoring predictions to specific components. Boundary conditions, such as maximum permissible stress, strain, or temperature, provide upper limits for predictions, while operational and maintenance history, including past repairs, can be factored into account for how prior actions influence future damage evolution. By embedding such physics knowledge into the training process, the model can generate more accurate, reliable, and interpretable forecasts, bridging the gap between data-driven learning and real-world behavior.

The multitask probabilistic spatiotemporal model 17 is configured to process both image sequence inputs and corresponding operational data to predict damage evolution. The training of the spatiotemporal model 17 employs a composite loss function, incorporating an image prediction loss component, a physics-based loss component, and a forecasted prediction loss component. The image prediction loss component evaluates the model's accuracy in forecasting future damage states in inspection images. The physics-based loss component enforces adherence to physical constraints, ensuring that the predictions remain realistic and consistent with engineering principles. The forecasted prediction loss component evaluates the model's capability to predict operational parameters, such as temperature and cycles, for future engine conditions.

With reference to FIG. 1, step 18 of the process, involves using the model 17 trained in step 16 for forecasting, where the trained machine learning network generates predictions for both predicted inspection images 19 (e.g., BSI5 and BSI6) and operational data (e.g., forecasted operational data predictions as shown in portion 15). During step 18, the model 17 leverages the insights learned during training to forecast future damage states based on historical inspection data and operational conditions.

The model's forecasts may include image sequences, representing the progression of damage features over time, and forecasted operational data, which captures the expected operational conditions, such as temperature and cycle counts, for subsequent engine cycles. Forecasted images 19 (e.g., BSI5 and BSI6) are then automatically annotated by the model 17 to identify future damage features such as cracks, wear, and corrosion in automatically annotated images 19a. These annotations 19b, are applied at the pixel or region level, allow the model 17 to highlight damage initiation points or new failure mechanisms, supporting more precise and detailed analysis. The annotations 19b applied to the images 19a generated by the model 17 can take various forms, such as color-coding specific regions to indicate the presence and severity of damage features. For example, a crack may be annotated as a red line to highlight its location and progression, while areas affected by corrosion might be shaded in yellow to emphasize surface degradation. Similarly, wear could be represented as an orange gradient to indicate its intensity across a region. These annotations not only localize damage features but also visually convey their severity, enabling engineers to quickly interpret and act on the model's predictions. The forecasted images are then used to quantify the overall damage in the engine part.

The model 17 may also analyze forecasted images 19 to quantify the overall damage in the engine part by aggregating identified damage features, such as cracks, corrosion, wear, and creep, across the entire component. Each damage feature is measured in terms of severity, size, and location, allowing for a comprehensive assessment of the component's condition. For instance, the length and propagation rate of cracks may be quantified to estimate structural integrity, while the extent of corrosion may be measured as a percentage of the affected surface area. These quantified metrics are then used to calculate a composite damage score or DR, which represents the overall health of the engine part and aids in determining the urgency of maintenance or replacement actions. For example, if the composite score falls into a moderate severity range, the system may recommend scheduling repairs within a set number of flight cycles or operating hours, whereas a higher severity score could prompt immediate inspection, part replacement, or more extensive refurbishing steps. By estimating the remaining useful life of a component, the system supports proactive maintenance planning and prevents unplanned downtime.

FIG. 2 shows a diagram for generating an improved analytical model based on the machine learning network of FIG. 1. The upper left quadrant illustrates the data collection process, where annotated inspection images 13a of engine components are paired with operational engine data, such as temperature and cycles (e.g., plot 14), to form the comprehensive dataset. This quadrant shows how inspection images 13 are manually or automatically annotated and labelled DR1, DR2, and DR3, as described above. In this instance, DR1, DR2 and DR3 represent scalar damage states and show increase in damage as the engine component is used over multiple cycles.

The plot 14 of operational engine data, with temperature on the vertical axis and cycles on the horizontal axis, represents the thermal and operational conditions experienced by the engine over time. Specific points on the plot correspond to the acquisition of the inspection images 13 of the engine component at different times and labelled different damage states (e.g., DR1, DR2, DR3). These points are linked to their respective annotated images 13a through dashed lines, indicating how operational conditions are aligned with observed damage features.

The upper right quadrant further illustrates the training process for the proposed analytic model, illustrating how annotated inspection images and operational engine data are integrated to form the training inputs. The process begins with annotated images 13a, the damage states (e.g., DR1, DR2, DR3), operational engine data, depicted as the plot 14, and failure mode features described above being used as inputs. In other words, the failure mode features, operational data, damage states, and annotated images collectively form a multidimensional dataset that serves as input to the analytic model 17.

The "input" arrow connects this dataset to the model 17, which represents the machine learning network being trained. By analyzing the spatial patterns in the inspection images, the scalar damage states, alongside the temporal trends in operational data, the model 17 learns to predict future damage states and associated operational parameters. This integration of visual and contextual data during training ensures that the model 17 is capable of accurately forecasting damage evolution, supporting advanced predictive maintenance strategies.

The bottom left and right quadrants of FIG. 2 illustrate the final steps of the process, focusing on the inference phase where the trained analytic model 17 generates actionable forecasts. This step integrates predictions for both future inspection images and operational engine data, providing comprehensive insights for damage identification and predictive maintenance.

In the bottom left quadrant, the model's predictions are shown as an extension of operational data into future cycles of the engine, represented in the portion 15 of the plot 14 with temperature on the vertical axis and cycles on the horizontal axis. The portion 15 illustrates how future inspection images (e.g., forecasted images 19) are aligned with operational data points, which are linked through dashed arrows. The forecasted images 19 provide a visual representation of anticipated damage progression, while the forecasted operational data of portion 15 forecasts key parameters, such as temperature and cycles, for future operational conditions. The forecasted images 19, such as BSI5 and BSI6 of FIG. 1, capture the anticipated evolution of damage features, including cracks, wear, and other degradation mechanisms, enabling proactive identification of failure modes.

In the bottom right quadrant, the trained analytic model 17 uses the two inputs the forecasted images 19 and forecasted operational data as portion 15, to perform DR forecasting. Together, the forecasted images 19 and forecasted operational data enable DR forecasting, which is then used for proactive maintenance planning. By correlating operational conditions with predicted damage states, the model 17 facilitates more accurate time-on-wing estimates for engine components and optimized maintenance schedules.

This forecasting capability of the model 17 provides valuable insights into the evolution of damage, enabling proactive maintenance planning and reducing reliance on manual inspections as described below with respect to FIG. 3. The automated annotation of forecasted images 19 reduces the need for human intervention in damage and wear analysis, while the forecasted operational data 15 provides predictive context to optimize maintenance schedules. Together, the forecasted images 19 and the forecasted operational data 15 enhance the operational efficiency and safety of the engine by delivering accurate, reliable, and actionable predictions for future damage states and conditions.

FIG. 3 illustrates a method 20 for implementing the previously described model 17 to achieve forecasted damage states and enable adaptive optimized maintenance scheduling. The method 20 begins at step 22 with the identification of specific engine parts 21a and 23a from different engines, such as first engine 21 and second engine 23, respectively. The parts 21a and 23a are subjected to inspections including obtaining images to evaluate their current condition. Common parts include turbine blades, fuel nozzles, and shrouds, which are prone to wear and damage due to operational stress as described above.

At step 22, an imaging device 25, such as a borescope inspection tool or a camera, may be used to capture high-resolution images of the engine components. These images provide detailed visual data about damage features, such as cracks, creep, corrosion, and wear, which serve as the primary input for the next stage. The imaging device 25 enables non-invasive and efficient image capture, ensuring minimal disruption to engine operation.

At step 24, the captured inspection images are processed using the disclosed machine learning model of FIGS. 1 and 2. As previously described, this model combines annotated visual data, operational parameters (e.g., temperature, cycles), and domain-specific physics knowledge to forecast damage states for future cycles. The model leverages spatiotemporal relationships and probabilistic predictions to assess how damage is likely to progress under continued operational conditions. The model outputs forecasted damage states, which provide a predictive visualization of how damage features will evolve in future operational cycles. This includes identifying the initiation and propagation of failure mechanisms, such as crack growth or material degradation. Additionally, at step 24, a predicted DR for the engine component is calculated based on the predicted image and the forecasted operational engine data. These predictions inform decision-making by enabling proactive maintenance planning.

At step 26, the forecasted damage states and the predicted DRs are utilized to create an adaptive maintenance schedule. This scheduling is optimized based on the specific predictions for each engine part, ensuring maintenance activities are timed to prevent failure while minimizing unnecessary inspections or downtime. By tailoring the maintenance schedule to the engine's actual condition, operational efficiency is maximized, and costs are reduced.

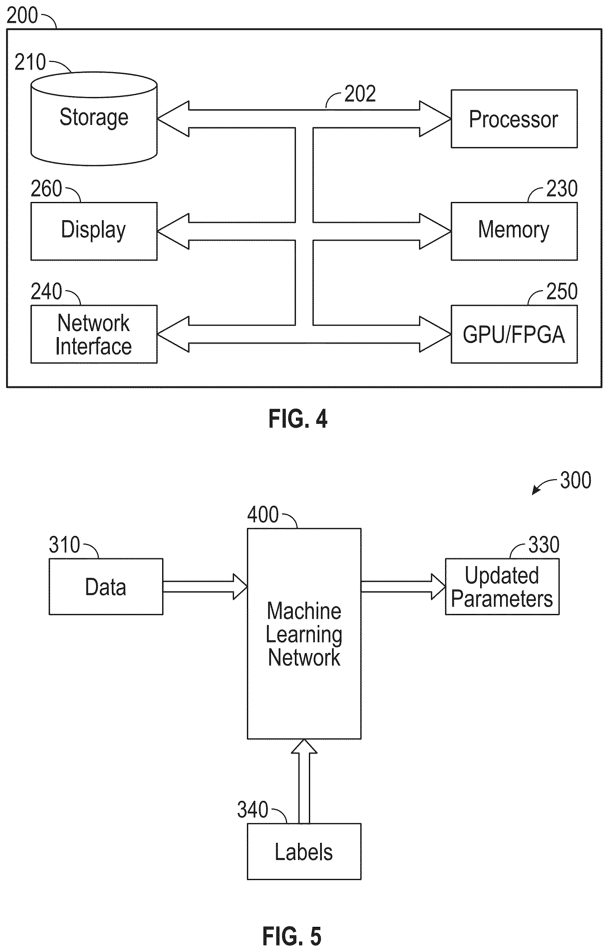

The DR information may be stored in a maintenance database or records management system, e.g., storage 210 of the computer system 200 of FIG. 4, where each calculated DR is timestamped with approximate future time and associated with the corresponding forecasted inspection image and operational parameters. An operator interface or dashboard can retrieve and display the DR values for each engine component on a display screen 260 of the computer system 200 of FIG. 4, highlighting whether certain thresholds for severity have been exceeded. If a distress rank surpasses a critical limit, the computer system 200 may automatically generate and send a notification (e.g., an email, SMS alert, or in-application message) to the maintenance team or the operations center, prompting immediate review. The DR values may further be visualized as color-coded indicators in a graphical user interface output on the display screen 260, enabling personnel to quickly understand which components are in urgent need of attention, thereby facilitating timely and cost-effective maintenance decisions.

Based on these forecasts, a maintenance system, e.g., computer system 200 of FIG. 4, generates a tailored maintenance schedule that dynamically adjusts to the condition of each component. For example, if high-temperature cycles accelerate blade erosion or thermal fatigue in S1 blades, the maintenance system schedules an inspection and/or replacement of the blades before failure occurs, avoiding fixed intervals that may lead to unnecessary inspections. Similarly, if carbon buildup in fuel nozzles is predicted to reach critical thresholds, the maintenance system schedules cleaning or replacement tasks in advance to prevent performance degradation. These schedules are optimized to minimize unnecessary maintenance actions, reducing labor and material costs while ensuring engine reliability.

To further enhance efficiency, the system coordinates maintenance tasks across components to reduce downtime. For instance, inspections for S1 blades might be aligned with cleaning or replacing fuel nozzles if their forecasted damage states coincide. Critical components with higher failure risks are prioritized to maintain engine safety and performance. The schedule is integrated into maintenance management systems, which provide technicians with real-time notifications and detailed instructions. Digital tools, such as augmented reality systems, guide technicians to focus on predicted damage areas, such as specific blade edges or nozzle openings. A feedback loop ensures that post-maintenance observations and updated sensor data refine future forecasts and optimize subsequent schedules.

By implementing this adaptive approach, the system ensures that maintenance is performed precisely when needed, enhancing reliability and minimizing downtime. For instance, if S1 blade erosion is forecasted to accelerate due to prolonged high-temperature operations, an earlier inspection and replacement may be scheduled, preventing failure. Similarly, if trends indicate that fuel nozzle clogging is approaching a critical threshold, a cleaning task can be incorporated into the next maintenance cycle. This tailored approach reduces unnecessary inspections, extends component life, and optimizes resource allocation, resulting in a highly reliable, cost-efficient, and operationally effective maintenance strategy.

Referring now to FIG. 4, exemplary components of the computer system 200, used for training and executing the machine learning model 17 in accordance with aspects of the present disclosure, include a database 210, one or more processors 220, at least one memory 230, and a network interface 240. In some embodiments, the computer system 200 may also include a graphical processing unit (GPU) or field programmable gate array (FPGA) 250, which is optimized for processing the computationally intensive operations required by machine learning models, such as matrix calculations in neural networks.

The database 210 serves as the primary storage for data used in the system. This storage may encompass any device capable of holding information in electromagnetic or optical forms, including volatile memory like RAM, non-volatile memory like flash drives, hard disks, and/or optical media. Stored data may include user preferences, historical data, training datasets, and other relevant information. The data in the database 210 is accessible to the processor 220 via a system bus for processing and analysis.

The processor 220 executes various tasks using instructions stored in memory 230. These tasks may include analyzing input data, training machine learning models, or responding to requests from user devices. Requests from user devices, such as mobile phones or client computers, are communicated to the computer system 200 through the network interface 240, which supports wired or wireless connections. While FIG. 4 illustrates core components, it should be understood that additional components may be incorporated into the computer system 200 based on specific implementation requirements.

The computer system 200 further includes the display screen 260, which serves as an interface for visualizing outputs from the model 17. The display screen 260 may be a touchscreen, allowing direct user interaction with graphical elements, or a standard monitor used in combination with user input devices such as a keyboard and mouse. In some embodiments, the display screen 260 presents graphical representations of the predicted DR for each engine component, color-coded indicators reflecting damage severity, forecasted inspection images, and relevant operational parameters. Additionally, the display screen 260 can function as part of a GUI, facilitating user interactions with stored data, retrieved information, and generated recommendations.

Referring to FIG. 5, a block diagram 300 of the machine learning network 400 is shown. The machine learning network 400 may be designed for classifying data using various machine learning approaches, including convolutional neural networks (CNNs), regression models, and recurrent neural networks (RNNs). The machine learning network 400 is capable of leveraging classification models such as decision trees, Naive Bayes, and k-nearest neighbor algorithms. The classification process typically involves using a labeled dataset, which includes data 310 and associated labels 340. During training, updated parameters 330 may also be produced to iteratively refine the network's performance based on feedback or optimization criteria. The training and execution of the machine learning network 400 are performed on the computer system 200 described in FIG. 4.

A CNN, as an example of the machine learning network 400, processes data through a series of layers, each designed to extract meaningful features. The convolutional aspect involves applying matrix operations to localized portions of the input data, producing feature maps that highlight important characteristics of the input. These feature maps are then passed through additional layers, such as activation layers and pooling layers, to refine the extracted information and reduce dimensionality. This process allows the machine learning network 400 to effectively identify patterns in the data 310. For example, unique features derived from specific inputs help the machine learning network 400 differentiate between various classes of data 310.

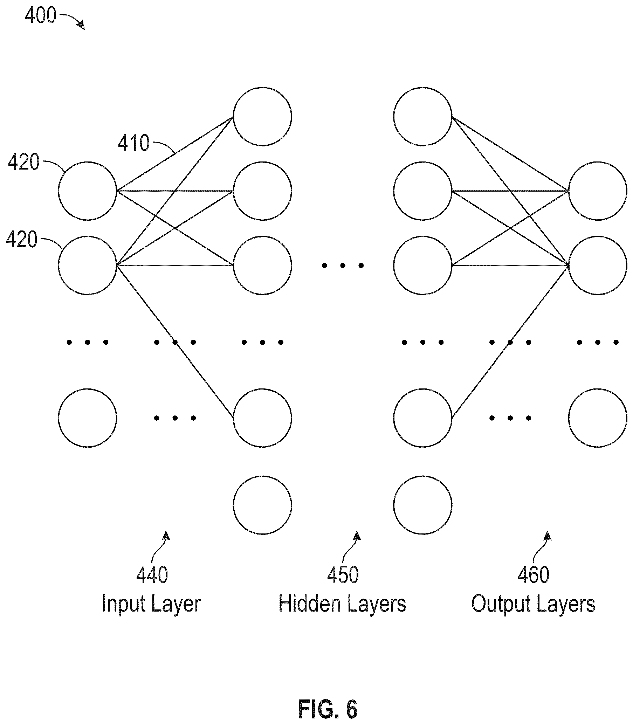

Referring to FIG. 6, the machine learning network 400 generally includes an input layer 440, multiple hidden layers 450, and an output layer 460. Each layer contains neurons 420 (nodes), which are interconnected by weights 410. These weights 410, along with biases, determine how data 310 is processed through the machine learning network 400. Each neuron 420 applies a specific function to its inputs, and the resulting values are propagated to subsequent layers. Learning in the machine learning network 400 involves iteratively adjusting the weights and biases through optimization algorithms, enabling the network to improve its accuracy over time. These weights and biases, often referred to as filters or kernels, capture specific features of the input data, such as shapes or patterns.

The machine learning network 400 undergoes training using labeled data to optimize its weights and biases. This training may involve supervised learning, semi-supervised learning, or reinforcement learning. For example, feature data samples may be labeled and used to train the network to classify inputs accurately. While CNNs are highlighted as an example, other machine learning classifiers may also be employed, depending on the specific application. The system's training process, combined with its ability to dynamically adjust and optimize its parameters, enables robust and accurate data classification for a variety of applications.

The implementation of the machine learning network 400, as illustrated in FIG. 6, to train the predictive model 17 involves integrating multiple layers and diverse data sources to create a robust and domain-specific solution. The network 400 is designed with an input layer 440 that receives annotated images of engine components, operational engine data, and other domain-specific inputs such as temperature, pressure, and vibration readings. These annotated images, coupled with corresponding labels, provide the network 400 with visual and contextual information about the engine's condition, while the operational data offers quantitative insights into real-time performance. Additionally, domain-specific physics knowledge is encoded into the model through custom-designed layers or integrated loss functions, ensuring that predictions align with known physical laws governing engine behavior.

The hidden layers 450 in the network 400 are configured to extract hierarchical features from the input data. Convolutional layers process annotated images to identify patterns such as material wear or structural deformation, while dense layers handle the fusion of operational data and physics-based inputs. A composite loss function is employed during training to optimize the model's predictions. This loss function may include: an image prediction loss component, which penalizes errors in detecting visual anomalies in the annotated images; a physics-based loss component, which ensures that predictions remain consistent with physical constraints, such as energy conservation or material stress limits; and a forecasted prediction loss component, which evaluates the accuracy of the model 17 in forecasting future engine states based on historical data and simulated operational conditions. These components work together to fine-tune the weights 410 and biases across the network 400, ensuring that the model 17 achieves both accuracy and domain relevance.

During training, the model 17 iteratively processes batches of data, adjusting its parameters to minimize the composite loss. For example, when an annotated image of an engine blade with visible erosion is input, the convolutional layers extract spatial features, while the physics-based layers validate whether the predicted wear rate aligns with the known operational parameters. Similarly, forecasted predictions are tested against future engine states derived from operational data, allowing the model 17 to refine its ability to anticipate potential failures. By combining annotated visual data, operational metrics, and domain-specific physics knowledge, the machine learning network 400 delivers the predictive model 17 capable of accurately identifying damage states and forecasting the condition of engine components under real-world conditions. This integrative approach enhances the reliability and efficiency of maintenance scheduling and decision-making processes.

The disclosed machine learning network 400 is directed toward solving specific technical problems associated with forecasting damage in engine components. Unlike conventional methods that rely on static models or manual inspections, the disclosed framework integrates annotated images, operational data, and domain-specific physics knowledge to dynamically predict future damage states. The invention leverages advanced machine learning techniques, such as spatiotemporal modeling and hybrid frameworks, to improve the accuracy of damage forecasting by identifying complex relationships between physical damage mechanisms and operational conditions. This technological advancement addresses the limitations of prior methods, such as operator variability and the inability to capture multi-failure modes, by providing a robust, automated, and data-driven approach for damage identification.

The machine learning network 400 (e.g., model 17) is implemented to provide tangible improvements in engine maintenance and operational efficiency, representing a practical application of artificial intelligence in a physical domain. The network 400 processes real-world inputs, such as borescope images and operational engine parameters, to generate actionable outputs, including forecasted damage states and optimized maintenance schedules. For instance, by analyzing high-temperature cycles alongside annotated images of turbine blade erosion, the network 400 forecasts wear progression and schedules timely maintenance, thereby reducing the risk of catastrophic failures and extending the time-on-wing of components. These practical applications demonstrate how the disclosed system directly interacts with and improves physical processes in engine maintenance, transcending abstract data processing.

The disclosure also provides a technical solution for integrating physical constraints into machine learning predictions, which enhances the reliability and consistency of the outputs. For example, the physics-based loss component enforces principles such as the irreversibility of crack propagation and the temperature-dependent nature of material fatigue. By embedding these constraints into the training process of the model 17, the framework ensures that its predictions adhere to well-established physical laws, thereby improving their applicability in real-world scenarios. This integration of physics knowledge with machine learning represents a significant advancement over purely data-driven approaches, addressing concerns related to overfitting and model generalizability.

Additionally, the disclosed framework enhances computational efficiency by combining multi-task learning and domain-informed modeling to optimize resource use during training and inference. The system's ability to process diverse inputs-such as image sequences, operational parameters, and historical data-within a single framework reduces the need for separate models or manual preprocessing steps. For example, the model 17 simultaneously forecasts damage progression and operational conditions, enabling a unified approach to predictive maintenance. This efficiency highlights the practical utility of the disclosed invention and underscores its technological contributions to the field of aerospace and mechanical engineering.

The aspects disclosed herein are examples of the disclosure and may be embodied in various forms. For instance, although certain aspects herein are described as separate aspects, each of the aspects herein may be combined with one or more of the other aspects herein. Specific structural and functional details disclosed herein are not to be interpreted as limiting, but as a basis for the claims and as a representative basis for teaching one skilled in the art to variously employ this disclosure in virtually any appropriately detailed structure.

The phrases "in an aspect," "in aspects," "in various aspects," "in some aspects," or "in other aspects" may each refer to one or more of the same or different aspects in accordance with this disclosure.

Further aspects of the present disclosure are provided by the subject matter of the following clauses.

A computer system for damage forecasting of an engine component, the computer system comprising: a processor configured to: receive a captured image of the engine component and historical operational engine data; predict a future damage state and operational conditions by generating a predicted image of the engine component and forecasted operational engine data using a machine learning model based on the captured image of the engine component and the historical operational engine data; and calculate a predicted distress rank for the engine component based on the predicted image and the forecasted operational engine data; a storage storing the predicted distress rank, the predicted image, and the forecasted operational engine data; and a display screen configured to display the predicted distress rank, the predicted image, and the forecasted operational engine data.

The computer system according to any other clause, wherein the processor is further configured to: pair the captured image with the historical operational engine data based on at least one of a timestamp or operational cycle.

The computer system according to any other clause, wherein the machine learning model includes a composite loss function and is trained on image data including annotated inspection images and general operational engine data aligned with the image data by timestamps or operational cycles.

The computer system according to any other clause, wherein the machine learning model is configured to capture spatiotemporal correlations between the image data and the general operational engine data.

The computer system according to any other clause, wherein the composite loss function includes at least one of: an image prediction loss component configured to evaluate accuracy of the predicted image of the engine component; a physics-based loss component configured to enforce domain-specific physical constraints on the predicted future damage state; or a fly-forward prediction loss configured to evaluate the accuracy of forecasted operational engine data based on historical operational engine data.

The computer system according to any other clause, wherein the processor is further configured to annotate the predicted image with a damage feature, including color-coding a specific region of the predicted image corresponding to the predicted future damage state.

The computer system according to any other clause, wherein the processor is further configured to generate a maintenance schedule for the engine component based on the predicted distress rank and the forecasted operational engine data.

The computer system according to any other clause, wherein the machine learning model includes: an input layer configured to receive the captured image of the engine component and the operational engine data; one or more hidden layers, including: convolutional layers configured to extract spatial features from the captured image of the engine component, the spatial features including a damage-related pattern corresponding to at least one of a crack, wear, or corrosion; and recurrent layers configured to analyze temporal patterns in the operational engine data to predict trends related to the operational conditions; and an output layer configured to: generate the predicted image representing the predicted future damage state of the engine component; forecast operational engine parameters for future cycles including temperature and cycle counts; and calculate the predicted distress rank of the engine component based on the predicted image and the forecasted operational engine data.

A processor-implemented method for damage forecasting of an engine component, the method comprising: receiving a captured image of the engine component and historical operational engine data; predicting future damage state and operational conditions by generating a predicted image of the engine component and forecasted operational engine data using a machine learning model based on the captured image of the engine component and the historical operational engine data; calculating a predicted distress rank for the engine component based on the predicted image and the forecasted operational engine data; and storing in a storage the predicted distress rank, the predicted image, and the forecasted operational engine data; and displaying on a display screen the predicted distress rank, the predicted image, and the forecasted operational engine data.

The method according to any other clause, further comprising: pairing the captured image with the historical operational engine data based on at least one of a timestamp or operational cycle.

The method according to any other clause, wherein the machine learning model includes a composite loss function and is trained on image data including annotated inspection images and general operational engine data aligned with the image data by timestamps or operational cycles.

The method according to any other clause, wherein the machine learning model is configured to capture spatiotemporal correlations between the image data and the general operational engine data.

The method according to any other clause, wherein the composite loss function includes at least one of: an image prediction loss component configured to evaluate accuracy of the predicted image of the engine component; a physics-based loss component configured to enforce domain-specific physical constraints on the predicted future damage state; or a forecasted prediction loss component configured to evaluate the accuracy of forecasted operational engine data based on historical operational engine data.

The method according to any other clause, further comprising: annotating the predicted image with a damage feature, including color-coding a specific region of the predicted image corresponding to the predicted future damage state.

The method according to any other clause, further comprising: generating a maintenance schedule for the engine component based on the predicted distress rank and the forecasted operational engine data.

The method according to any other clause, wherein the machine learning model includes: an input layer configured to receive the captured image of the engine component and the operational engine data; one or more hidden layers, including: convolutional layers configured to extract spatial features from the captured image of the engine component, the spatial features including a damage-related pattern corresponding to at least one of a crack, wear, or corrosion; and recurrent layers configured to analyze temporal patterns in the operational engine data to predict trends related to the operational conditions; and an output layer configured to: generate the predicted image representing the predicted future damage state of the engine component; forecast operational engine parameters for future cycles including temperature and cycle counts; and calculate the predicted distress rank of the engine component based on the predicted image and the forecasted operational engine data.

A non-transitory computer-readable storage medium in which is stored instructions for causing a processor to execute a processor-implemented method for damage forecasting of an engine component, the method comprising: receiving a captured image of the engine component and historical operational engine data; predicting future damage state and operational conditions by generating a predicted image of the engine component and forecasted operational engine data using a machine learning model based on the captured image of the engine component and the historical operational engine data; calculating a predicted distress rank for the engine component based on the predicted image and the forecasted operational engine data; storing in a storage the predicted distress rank, the predicted image, and the forecasted operational engine data; and displaying on a display screen the predicted distress rank, the predicted image, and the forecasted operational engine data.

The non-transitory computer-readable storage medium according to any other clause, wherein the machine learning model includes a composite loss function and is trained on image data including annotated inspection images and general operational engine data aligned with the image data by timestamps or operational cycles.

The non-transitory computer-readable storage medium according to any other clause, wherein the composite loss function includes at least one of: an image prediction loss component configured to evaluate accuracy of the predicted image of the engine component; a physics-based loss component configured to enforce domain-specific physical constraints on the predicted future damage state; or a forecasted prediction loss component configured to evaluate the accuracy of forecasted operational engine data based on historical operational engine data.

The non-transitory computer-readable storage medium according to any other clause, wherein the machine learning model includes: an input layer configured to receive the captured image of the engine component and the operational engine data; one or more hidden layers, including: convolutional layers configured to extract spatial features from the captured image of the engine component, the spatial features including a damage-related pattern corresponding to at least one of a crack, wear, or corrosion; and recurrent layers configured to analyze temporal patterns in the operational engine data to predict trends related to the operational conditions; and an output layer configured to: generate the predicted image representing the predicted future damage state of the engine component; forecast operational engine parameters for future cycles including temperature and cycle counts; and calculate the predicted distress rank of the engine component based on the predicted image and the forecasted operational engine data.

A computer system for damage forecasting of an engine component, the computer system comprising: a processor configured to: receive a captured image of the engine component and historical operational engine data; predict a future damage state and operational conditions by generating a predicted image of the engine component and forecasted operational engine data using a machine learning model based on the captured image of the engine component and the historical operational engine data; and calculate a predicted distress rank for the engine component based on the predicted image and the forecasted operational engine data.

The computer system according to any other clause, wherein the processor is further configured to: pair the captured image with the historical operational engine data based on at least one of a timestamp or operational cycle.

The computer system according to any other clause, wherein the machine learning model includes a composite loss function and is trained on image data including annotated inspection images and general operational engine data aligned with the image data by timestamps or operational cycles.

The computer system according to any other clause, wherein the machine learning model is configured to capture spatiotemporal correlations between the image data and the general operational engine data.

The computer system according to any other clause, wherein the composite loss function includes at least one of: an image prediction loss component configured to evaluate accuracy of the predicted image of the engine component; a physics-based loss component configured to enforce domain-specific physical constraints on the predicted future damage state; or a fly-forward prediction loss configured to evaluate the accuracy of forecasted operational engine data based on historical operational engine data.

The computer system according to any other clause, wherein the processor is further configured to annotate the predicted image with a damage feature, including color-coding a specific region of the predicted image corresponding to the predicted future damage state.

The computer system according to any other clause, wherein the processor is further configured to generate a maintenance schedule for the engine component based on the predicted distress rank and the forecasted operational engine data.

The computer system according to any other clause, wherein the machine learning model includes: an input layer configured to receive the captured image of the engine component and the operational engine data; one or more hidden layers, including: convolutional layers configured to extract spatial features from the captured image of the engine component, the spatial features including a damage-related pattern corresponding to at least one of a crack, wear, or corrosion; and recurrent layers configured to analyze temporal patterns in the operational engine data to predict trends related to the operational conditions; and an output layer configured to: generate the predicted image representing the predicted future damage state of the engine component; forecast operational engine parameters for future cycles including temperature and cycle counts; and calculate the predicted distress rank of the engine component based on the predicted image and the forecasted operational engine data.

A processor-implemented method for damage forecasting of an engine component, the method comprising: receiving a captured image of the engine component and historical operational engine data; predicting future damage state and operational conditions by generating a predicted image of the engine component and forecasted operational engine data using a machine learning model based on the captured image of the engine component and the historical operational engine data; and calculating a predicted distress rank for the engine component based on the predicted image and the forecasted operational engine data.

The method according to any other clause, further comprising: pairing the captured image with the historical operational engine data based on at least one of a timestamp or operational cycle.

The method according to any other clause, wherein the machine learning model includes a composite loss function and is trained on image data including annotated inspection images and general operational engine data aligned with the image data by timestamps or operational cycles.

The method according to any other clause, wherein the machine learning model is configured to capture spatiotemporal correlations between the image data and the general operational engine data.

The method according to any other clause, wherein the composite loss function includes at least one of: an image prediction loss component configured to evaluate accuracy of the predicted image of the engine component; a physics-based loss component configured to enforce domain-specific physical constraints on the predicted future damage state; or a forecasted prediction loss component configured to evaluate the accuracy of forecasted operational engine data based on historical operational engine data.

The method according to any other clause, further comprising: annotating the predicted image with a damage feature, including color-coding a specific region of the predicted image corresponding to the predicted future damage state.

The method according to any other clause, further comprising: generating a maintenance schedule for the engine component based on the predicted distress rank and the forecasted operational engine data.

The method according to any other clause, wherein the machine learning model includes: an input layer configured to receive the captured image of the engine component and the operational engine data; one or more hidden layers, including: convolutional layers configured to extract spatial features from the captured image of the engine component, the spatial features including a damage-related pattern corresponding to at least one of a crack, wear, or corrosion; and recurrent layers configured to analyze temporal patterns in the operational engine data to predict trends related to the operational conditions; and an output layer configured to: generate the predicted image representing the predicted future damage state of the engine component; forecast operational engine parameters for future cycles including temperature and cycle counts; and calculate the predicted distress rank of the engine component based on the predicted image and the forecasted operational engine data.

A non-transitory computer-readable storage medium in which is stored instructions for causing a processor to execute a processor-implemented method for damage forecasting of an engine component, the method comprising: receiving a captured image of the engine component and historical operational engine data; predicting future damage state and operational conditions by generating a predicted image of the engine component and forecasted operational engine data using a machine learning model based on the captured image of the engine component and the historical operational engine data; and calculating a predicted distress rank for the engine component based on the predicted image and the forecasted operational engine data.

The non-transitory computer-readable storage medium according to any other clause, wherein the machine learning model includes a composite loss function and is trained on image data including annotated inspection images and general operational engine data aligned with the image data by timestamps or operational cycles.

The non-transitory computer-readable storage medium according to any other clause, wherein the composite loss function includes at least one of: an image prediction loss component configured to evaluate accuracy of the predicted image of the engine component; a physics-based loss component configured to enforce domain-specific physical constraints on the predicted future damage state; or a forecasted prediction loss component configured to evaluate the accuracy of forecasted operational engine data based on historical operational engine data.

The non-transitory computer-readable storage medium according to any other clause, wherein the machine learning model includes: an input layer configured to receive the captured image of the engine component and the operational engine data; one or more hidden layers, including: convolutional layers configured to extract spatial features from the captured image of the engine component, the spatial features including a damage-related pattern corresponding to at least one of a crack, wear, or corrosion; and recurrent layers configured to analyze temporal patterns in the operational engine data to predict trends related to the operational conditions; and an output layer configured to: generate the predicted image representing the predicted future damage state of the engine component; forecast operational engine parameters for future cycles including temperature and cycle counts; and calculate the predicted distress rank of the engine component based on the predicted image and the forecasted operational engine data.

## Claims

1. A computer system (200) for damage forecasting of an engine component, the computer system (200) comprising:
a processor (220) configured to:
receive a captured image (13) of the engine component and historical operational engine data;
predict a future damage state and operational conditions by generating a predicted image (19) of the engine component and forecasted operational engine data using a machine learning model (17) based on the captured image (13) of the engine component and the historical operational engine data; and
calculate a predicted distress rank for the engine component based on the predicted image (19) and the forecasted operational engine data.

2. The computer system (200) according to claim 1, wherein the processor (220) is further configured to:
pair the captured image (13) with the historical operational engine data based on a timestamp or operational cycle.

3. The computer system (200) according to any one of claims 1 or 2, wherein the machine learning model (17) includes a composite loss function and is trained on image data including annotated inspection images (13a) and general operational engine data aligned with the image data by timestamps or operational cycles.

4. The computer system (200) according to claim 3, wherein the machine learning model (17) is configured to capture spatiotemporal correlations between the image data and the general operational engine data.

5. The computer system (200) according to claim 3, wherein the composite loss function includes at least one of:
an image prediction loss component configured to evaluate accuracy of the predicted image (19) of the engine component;
a physics-based loss component configured to enforce domain-specific physical constraints on the predicted future damage state; or
a fly-forward prediction loss configured to evaluate the accuracy of forecasted operational engine data based on historical operational engine data.

6. The computer system (200) according to any one of claims 1-5, wherein the processor (220) is further configured to
annotate the predicted image (19) with a damage feature, including color-coding a specific region of the predicted image (19) corresponding to the predicted future damage state.

7. The computer system (200) according to one of claims 1-6, wherein the processor (220) is further configured to generate a maintenance schedule for the engine component based on the predicted distress rank and the forecasted operational engine data.

8. The computer system (200) according to one of claims 1-7, wherein the machine learning model (17) includes:
an input layer (440) configured to receive the captured image (13) of the engine component and the operational engine data;
one or more hidden layers (450), including:
convolutional layers configured to extract spatial features from the captured image (13) of the engine component, the spatial features including a damage-related pattern corresponding to at least one of a crack, wear, or corrosion; and
recurrent layers configured to analyze temporal patterns in the operational engine data to predict trends related to operational conditions; and
an output layer (460) configured to:
generate the predicted image (19) representing the future damage state of the engine component;
forecast operational engine parameters for future cycles including temperature and cycle counts; and
calculate the predicted distress rank of the engine component based on the predicted image (19) and the forecasted operational engine data.

9. A processor (220)-implemented method (10) for damage forecasting of an engine component, the method (10) comprising:
receiving a captured image (13) of the engine component and historical operational engine data;
predicting future damage state and operational conditions by generating a predicted image (19) of the engine component and forecasted operational engine data using a machine learning model (17) based on the captured image (13) of the engine component and the historical operational engine data; and
calculating a predicted distress rank for the engine component based on the predicted image (19) and the forecasted operational engine data.

10. The method (10) according to claim 9, further comprising:
pairing the captured image (13) with the historical operational engine data based on a timestamp or operational cycle.

11. The method (10) according to any one of claims 9 or 10, wherein the machine learning model (17) includes a composite loss function and is trained on image data including annotated inspection images (13a) and general operational engine data aligned with the image data by timestamps or operational cycles.

12. The method (10) according to claim 11, wherein the machine learning model (17) is configured to capture spatiotemporal correlations between the image data and the general operational engine data.

13. The method (10) according to claim 11, wherein the composite loss function includes at least one of:
an image prediction loss component configured to evaluate accuracy of the predicted image (19) of the engine component;
a physics-based loss component configured to enforce domain-specific physical constraints on the predicted future damage state; or
a forecasted prediction loss component configured to evaluate the accuracy of forecasted operational engine data based on historical operational engine data.

14. The method (10) according to any one of claims 9-13, further comprising:
annotating the predicted image (19) with a damage feature, including color-coding a specific region of the predicted image (19) corresponding to the predicted future damage state.

15. The method (10) according to any one of claims 9-14, further comprising:
generating a maintenance schedule for the engine component based on the predicted distress rank and the forecasted operational engine data.

16. The method (10) according to any one of claims 9-15, wherein the machine learning model (17) includes:
an input layer (440) configured to receive the captured image (13) of the engine component and the operational engine data;
one or more hidden layers (450), including:
convolutional layers configured to extract spatial features from the captured image (13) of the engine component, the spatial features including a damage-related pattern corresponding to at least one of a crack, wear, or corrosion; and
recurrent layers configured to analyze temporal patterns in the operational engine data to predict trends related to operational conditions; and
an output layer (460) configured to:
generate the predicted image (19) representing the future damage state of the engine component;
forecast operational engine parameters for future cycles including temperature and cycle counts; and
calculate the predicted distress rank of the engine component based on the predicted image (19) and the forecasted operational engine data.
